# EUROPEAN PATENT APPLICATION

(11) **EP 4 764 164 A1**
(43) Date of publication of application: **24.06.2026**
(21) Application number: 25214507.3
(22) Date of filing: 10.11.2025
(51) Int. Cl.: F01D 11/12, B22F 5/00

(54) **FLUID FLOW MACHINE, VEHICLE AND METHOD OF MANUFACTURING A FLUID FLOW MACHINE**

(30) Priority: 10.12.2024 GB 202418072
(71) Applicant: Rolls-Royce plc, London N1 9FX (GB)
(72) Inventor: Wojewodka, Michael M, Derby, DE24 8BJ (GB); Campbell, James D, Derby, DE24 8BJ (GB); Everington, Daniel P T, Derby, DE24 8BJ (GB); Davies, Hannah C, Derby, DE24 8BJ (GB)
(74) Representative: Rolls-Royce plc

(57) **Abstract**

There is provided a fluid flow machine (10) comprising a casing structure (24), a turbomachine blade (311) disposed within the casing structure (24), and a sealing arrangement (330) coupled to the casing structure (24). The sealing arrangement (330) comprises (330) an abrasion portion (334) including a lattice structure (400). The abrasion portion (334) is configured to provide a seal with a tip (321) of the turbomachine blade (311). The abrasion portion (334) includes a filler (500) within the lattice structure (400), the filler comprising one or more selected from: a polyester, a polyimide, a cyanate ester, a siloxane, a polysiloxane or a polyepoxide.
There is also provided a vehicle (200) comprising such a fluid flow machine (10).
There is also provided a method (600) of manufacturing such a fluid flow machine (10).

## Description

### CROSS REFERENCE TO RELATED APPLICATIONS

This represents the first application directed towards the subject-matter.

### FIELD

This disclosure relates to a fluid flow machine (e.g., a gas turbine engine) comprising a casing structure, a turbomachine blade and a sealing arrangement. This disclosure further relates to a vehicle (e.g., an aircraft) comprising such a fluid flow machine and to a method of manufacturing a fluid flow machine.

### BACKGROUND

In a fluid flow machine, a stationary component (e.g., a casing/wall) may be positioned in a close proximity to a moving component (e.g., a rotating turbomachine blade) to reduce leakage of fluid (e.g., gas) between the stationary component and the moving component. However, in use, the moving component may be subject to flexure and/or vibration, which may lead a portion (e.g., a tip) of the moving component to come into contact with the stationary component. Such contact may result in erosion of/wear on the moving component and/or the stationary component, which in turn may affect performance of the fluid flow machine.

The present invention has been devised with the foregoing in mind.

### SUMMARY

According to a first aspect there is provided a fluid flow machine comprising: a casing structure, a turbomachine blade disposed within the casing structure, and a sealing arrangement coupled to the casing structure. The sealing arrangement comprises a support structure and an abrasion portion including a lattice structure. The abrasion portion being formed on the support structure. The abrasion portion is configured to provide a seal with a tip of the turbomachine blade.

In an embodiment, the lattice structure comprises (e.g., is essentially composed of) a plurality of lattice rods and a plurality of lattice nodes at intersections therebetween.

In an embodiment, the abrasion portion includes a filler within the lattice structure, the filler comprising one or more (e.g., any one, any two, any three, any four or any five) selected from (or all of): a polyester, a polyimide, a cyanate ester, a siloxane, a polysiloxane or (e.g., and) a polyepoxide.

In an embodiment, the filler further comprises one or more (e.g., any one or any two) selected from (or all of): boron nitride, bentonite or (e.g., and) silicate-based microspheres.

In an embodiment, the filler further comprises borosilicate glass microspheres.

In an embodiment, the lattice structure includes one or more (e.g., any one, any two or any three) selected from (or all of): nickel, a nickel chromium alloy, stainless steel or (e.g., and) an aluminum silicon alloy.

In an embodiment, the abrasion portion does not include a foam. In an embodiment, the abrasion portion extends completely around an angular (e.g., a circumferential) extent of the fluid flow machine.

In an embodiment, the sealing arrangement is coupled to the casing structure by positive contact between complementary formations of the sealing arrangement and the casing structure.

In an embodiment, a geometrical parameter of the abrasion portion varies along an axial direction and/or a radial direction of the fluid flow machine. In an embodiment, the geometrical parameter is one of a plurality of geometrical parameters of the abrasion portion which vary along the axial direction and/or the radial direction of the fluid flow machine. In an embodiment, the one or more geometrical parameters (e.g., the geometrical parameter or the plurality of geometrical parameters) includes one or more (e.g., any one, any two, any three or any four) selected from (or all of): a lattice rod thickness, a lattice cell size, a ratio between a filler volume and a lattice rod volume, a number of lattice rods per lattice node, or (e.g., and) an angle between adjacent lattice rods at a lattice node.

In an embodiment, the fluid flow machine is a gas turbine engine.

According to a second aspect there is provided a vehicle comprising a fluid flow machine in accordance with the first aspect.

In an embodiment, the vehicle is an aircraft.

According to a third aspect there is provided a method of manufacturing a fluid flow machine, the method comprising: producing a sealing arrangement comprising a support structure and an abrasion portion, the abrasion portion being formed on the support structure, the abrasion portion including a lattice structure; and coupling the sealing arrangement to a casing structure such that the abrasion portion is configured to provide a seal with a tip of a turbomachine blade disposed within the casing structure, wherein producing the sealing arrangement includes forming the abrasion portion.

In an embodiment, forming the abrasion portion includes constructing the lattice structure by fabricating a plurality of lattice rods and a plurality of lattice nodes at intersections therebetween.

In an embodiment, forming the abrasion portion includes constructing the lattice structure using an additive manufacturing process.

In an embodiment, forming the abrasion portion includes inserting a filler into the lattice structure, the filler comprising one or more (e.g., any one, any two, any three, any four, any five) selected from (or all of): a polyester, a polyimide, a cyanate ester, a siloxane, a polysiloxane or (e.g., and) a polyepoxide.

In an embodiment, the filler further comprises one or more (e.g., any one or any two) selected from (or all of): boron nitride, bentonite or (e.g., and) silicate-based microspheres.

In an embodiment, the filler further comprises borosilicate glass microspheres.

In an embodiment, the lattice structure includes one or more (e.g., any one, any two or any three) selected from (or all of): a nickel, a nickel chromium alloy, a stainless steel or (e.g., and) an aluminum silicon alloy.

In an embodiment, the method comprises coupling the sealing arrangement to the casing structure by positive contact between complementary formations of the sealing arrangement and the casing structure.

In an embodiment, forming the abrasion portion includes causing a geometrical parameter of the abrasion portion to vary along a primary direction and/or a secondary direction, wherein the primary direction and the secondary direction respectively correspond to an axial direction and a radial direction of the fluid flow machine when the sealing arrangement is coupled to the casing structure. In an embodiment, the geometrical parameter is one of a plurality of geometrical parameters of the abrasion portion which vary along the primary direction and/or the secondary direction. In an embodiment, the one or more geometrical parameters (e.g., the geometrical parameter or the plurality of geometrical parameters) includes one or more (e.g., any one, any two, any three or any four) selected from (or all of): a lattice rod thickness, a lattice cell size, a ratio between a filler volume and a lattice rod volume, a number of lattice rods per lattice node, or (e.g., and) an angle between adjacent lattice rods at a lattice node.

According to a fourth aspect there is provided a fluid flow machine (e.g., a gas turbine engine) obtainable by (e.g., obtained by) the method of the third aspect.

### BRIEF DESCRIPTION OF THE DRAWINGS

Embodiments will now be described by way of example only with reference to the accompanying drawings in which:
FIG. 1 is a simplified view of an example aircraft comprising a gas turbine engine;
FIG. 2 is a sectional view of an example gas turbine engine;
FIG. 3 is detail section view of the gas turbine engine of FIG. 2 showing a sealing arrangement which includes an example abrasion portion;
FIG. 4 is a detail perspective cutaway view of the gas turbine engine of FIG. 2;
FIG. 5 is a section view of the example abrasion portion of FIG. 2 in isolation; and
FIG. 6 is a flowchart showing an example method of manufacturing a gas turbine engine.

### DETAILED DESCRIPTION

### Aircraft

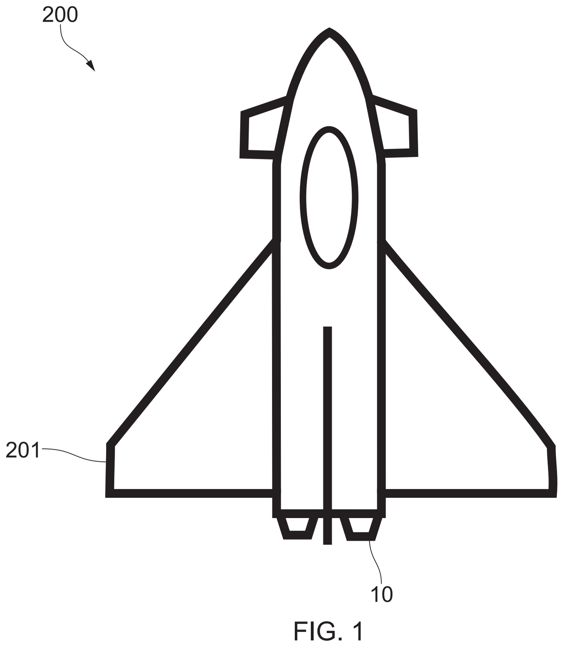

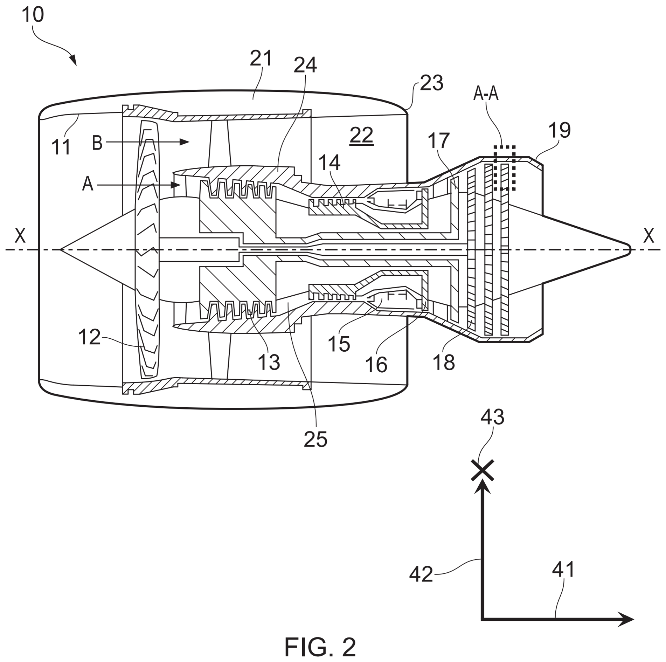

FIG. 1 shows a simplified and schematic view of an aircraft 200 comprising an airframe 201 and a gas turbine engine 10. The gas turbine engine 10 may be in accordance with the gas turbine engine 10 described below with reference to FIGs. 2 to 5.

### Gas turbine engine

FIG. 2 shows an example ducted fan gas turbine engine 10 having a principal and rotational axis X-X. The gas turbine engine 10 is suitable for use with the aircraft 200 described above with FIG. 1. The engine comprises, in axial flow series, an air intake 11, a propulsive fan 12, an intermediate-pressure compressor 13, a high-pressure compressor 14, a combustor 15, a high-pressure turbine 16, an intermediate pressure turbine 17, a low-pressure turbine 18 and a core engine exhaust outlet 19. A nacelle 21 generally surrounds the gas turbine engine 10 and defines the intake 11, a bypass duct 22 and a bypass exhaust outlet 23.

During operation, air entering the intake 11 is accelerated by the fan 12 to produce two gas flows: a first gas flow A into the intermediate pressure compressor 13 and a second gas flow B which passes through the bypass duct 22 to provide propulsive thrust. The intermediate-pressure compressor 13 compresses the gas flow A directed into it before delivering that air to the high-pressure compressor 14 where further compression takes place.

The compressed air exhausted from the high-pressure compressor 14 is directed into the combustor 15 where it is mixed with fuel and the mixture combusted. The resultant hot combustion products then expand through, and thereby drive the high, intermediate and low-pressure turbines 16, 17, 18 before being exhausted through the core engine exhaust outlet 19 to provide additional propulsive thrust. The high, intermediate and low-pressure turbines 16, 17, 18 respectively drive the high and intermediate pressure compressors 13, 14 and the fan 12 by suitable interconnecting shafts.

A casing structure 24 surrounds the compressors 13, 14, the combustor 15 and the turbines 16, 17, 18 to separate the bypass duct 22 from a core duct 25. The casing structure 24 therefore extends completely around an axial direction 41 of the gas turbine engine 10 (e.g., extends completely around an angular extent of the gas turbine engine 10). The casing structure 24 may also be referred to as a support duct.

As will be appreciated by those skilled in the art, the axial direction 41 corresponds (e.g., is parallel to) to the principal rotational axis X-X. An angular direction 43 of the gas turbine engine 10 corresponds to a direction of rotation of the turbines 16, 17, 18 and the compressors 13, 14 (and the interconnecting shafts therebetween) around the principal rotational axis X-X in use. A radial direction 42 of the gas turbine engine 10 extends away from the principal rotational axis X-X and is mutually perpendicular to both the axial direction 41 and the angular direction 43. As will also be appreciated by those skilled in the art, each compressor 13, 14 and turbine 16, 17, 18 comprises one or more rotor and stator pairs, with each rotor having a plurality of blades (i.e., turbomachine blades). The axial direction 41, radial direction 42 and angular direction 43 are indicated on each of FIGs. 2 to 5.

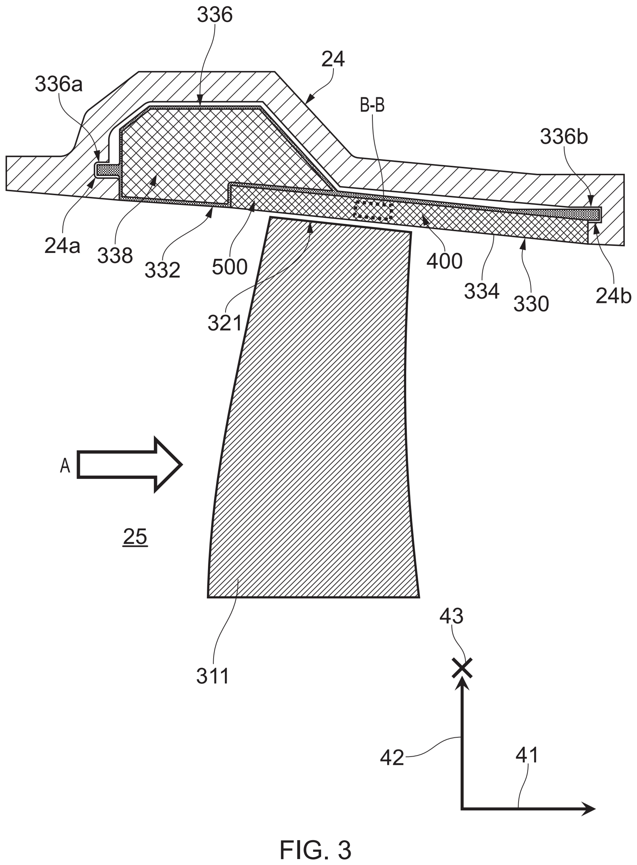

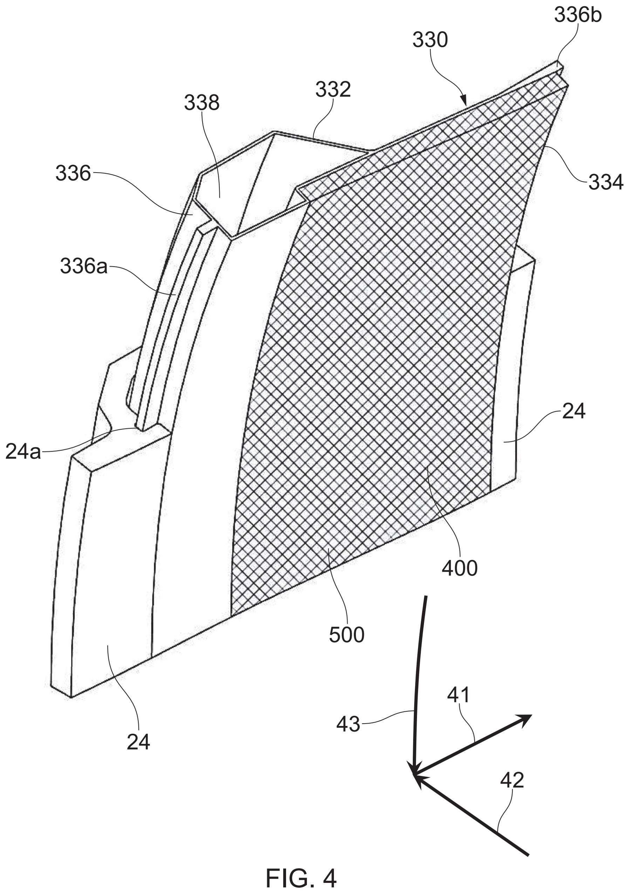

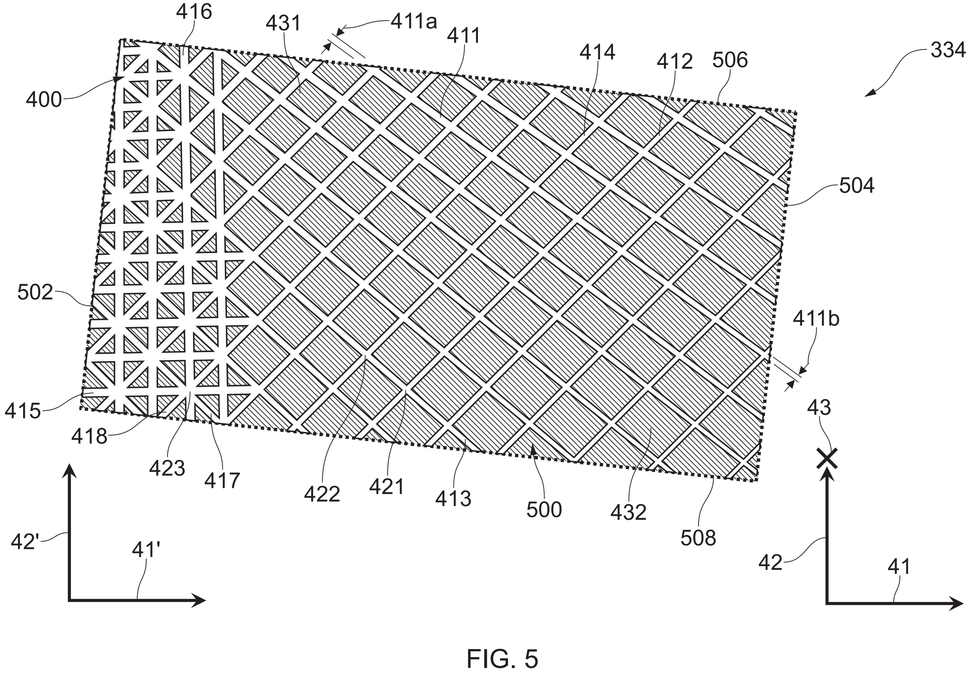

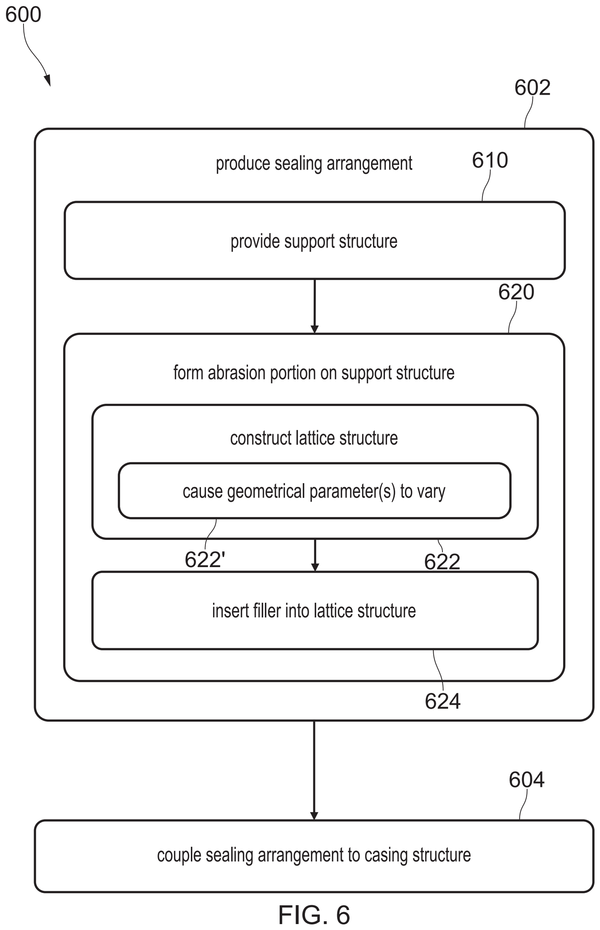

The following description is provided with particular reference to FIGs. 3 to 6. FIG. 3 is a sectional view of the example gas turbine engine of FIG. 2 as indicated by region A-A on FIG. 2, the example gas turbine engine 10 including a sealing arrangement 330 which comprises an example abrasion portion 334. FIG. 4 is a detail perspective cutaway view of the gas turbine engine of FIG. 2 showing the casing structure 24 and the example abrasion portion 334 in isolation. FIG. 5 is a section view of the example abrasion portion 334 in isolation, as indicated by region B-B on FIG. 3. FIG. 6 is a flowchart which shows an example method 600 of manufacturing a gas turbine engine (e.g., the gas turbine engine 10 of FIG. 2).

FIG. 3 shows a single turbomachine blade 311 which forms part of a rotor of the low-pressure turbine 18 (e.g., a turbine stage) of the gas turbine engine 10 per region A-A on FIG. 2. The turbomachine blade 311 is one of the plurality of turbomachine blades (not shown), each of which is disposed within the casing structure 24 and includes a tip 321 which is in proximity (e.g., adjacent and/or opposing) to the abrasion portion 334. The turbomachine blades 311 each extend towards, and are mechanically coupled to, a central hub (not shown) so as to form a bladed disc of the low-pressure turbine 18. The central hub may, in turn, be mechanically coupled to or integral with the interconnecting shaft which links the low-pressure turbine 18 to one of the compressors 13, 14. The plurality of turbomachine blades are uniformly angularly offset (e.g., evenly/equally spaced apart along the angular direction 43) from one another. In gas turbine engines 10 according to the present disclosure, any non-zero number of turbomachine blades 311 may be disposed within the casing structure 24.

In use, the sealing arrangement 330 provides a seal with the tip 321 of the turbomachine blade 311 by inhibiting flow of gas (e.g., the first gas flow A) between the tip 321 of the turbomachine blade 311 and the casing structure 24. To this end, the sealing arrangement 330 (and the abrasion portion 334) arcuately extends completely around the axial direction 41 of the gas turbine engine 10. The sealing arrangement 330 may be made up of one or more segments (e.g., arcuate segments) which abut, or interlock with, one another around the axial direction 41 of the gas turbine engine 10.

Because of the proximity between the tip 321 of the turbomachine blade 311 and the abrasion portion 334, the tip 321 of the turbomachine blade 311 may come into contact with the abrasion portion 334 during operation of the gas turbine engine 10. That is, due to flexure/vibration of the interconnecting shaft, the central hub and/or the turbomachine blade 311 as the gas turbine engine 10 operates, the tip 321 of the turbomachine blade 311 may be caused to rub against the abrasion portion 334. The abrasion portion 334 is generally configured to be more easily abraded (e.g., worn) than the tip 321 of the turbomachine blade 311, such that rubbing between the tip 321 of the turbomachine blade 311 and the abrasion portion 334 results in material being lost from the abrasion portion 334 in preference to material being lost from the tip 321 of the turbomachine blade 311 (and thereby preserving the precise structure and function of the turbomachine blade 311). As described in further detail below, the sealing arrangement 330 may be coupled to the casing structure 24 in such a way to facilitate easy removal and replacement (e.g., when a relatively large amount of material has been worn away/removed from the abrasion portion 334) during engine maintenance/overhaul.

The casing structure 24 includes a sealing arrangement 330. The sealing arrangement 330 is produced during block 602 of the method 600 shown by FIG. 6 and is subsequently coupled to the casing structure 24 during block 604 of the method 600 so as to be located adjacent to and provide the seal with the tip 321 of the turbomachine blade 311 as disposed within the casing structure 24. In turn, producing the sealing arrangement, at block 602, includes providing, at block 610, a support structure 332 and forming, at block 620, the abrasion portion 334 on the support structure 332.

Providing, at block 610, the support structure 332 may include forming (e.g., making) the support structure 332 (e.g., using a casting process, a machining process, or an additive manufacturing process, or a combination thereof). The support structure 332 defines an external body 336 and an internal void 338. The external body 336 includes plurality of protrusions 336a, 336b having a shape which is complementary to a shape of a respective recess 24a, 24b defined in (e.g., by) the casing structure 24. The external body 336 may be formed by a casting and/or a machining process. The internal void 338 may comprise a mesh structure or another type of structure formed by an additive manufacturing process for an aerothermal purpose within the gas turbine engine 10.

The action of forming, at block 620, the abrasion portion 334 includes constructing, at block 622, a lattice structure 400 on the support structure 332 (e.g., on the external body 336 of the support structure 332) by fabricating a plurality of lattice rods and a plurality of lattice nodes at intersections therebetween, such that at least two of the plurality of lattice rods intersect at each lattice node. The lattice structure 332 may be formed on the support structure using an additive manufacturing process (e.g., an additive layer manufacturing process) such as powder bed fusion (PBF) or selective laser sintering (SLS) or using a metal injection molding (MIM) process. Accordingly, the abrasion portion 334 includes the lattice structure 400. The lattice structure 400 may comprise (e.g., be formed from) a metal such as aluminum, chromium, iron, cobalt, nickel or copper. Namely, the lattice structure 400 may comprise (e.g., be formed from): a nickel (e.g., substantially pure nickel), a nickel chromium alloy (e.g., chromized nickel, CoNiCrAlY, or an Inconel such as In718), a stainless steel, or an aluminum silicon alloy, or a combination thereof.

The action of forming, at block 620, the abrasion portion 334 includes inserting, at block 624, a filler 500 into the lattice structure 400. Accordingly, the abrasion portion 334 includes the filler 500 within the lattice structure 400. The filler 500 may be inserted into the lattice structure 400 by injection under pressure or by gravity.

The filler 500 may comprise (e.g., be substantially composed of) a non-metal (e.g., a polymer) matrix such as a polyester, a polyimide, a cyanate ester, a siloxane (e.g., a polysiloxane), or a polyepoxide, or a combination thereof. The filler 500 may further comprise (e.g., be partially composed of) an additive (e.g., a particle additive) configured to inhibit dislocation motion within the non-metal matrix and thus promote brittle fracture of the filler 500. The additive may therefore be referred to as a dislocator additive (or, more simply, a dislocator). The additive may comprise (e.g., consist essentially of) graphite, talc, boron nitride, bentonite, or silicate-based microspheres (e.g., borosilicate glass microspheres), or a combination thereof. The presence of such an additive promotes abradability of the abrasion portion 334.

As best shown by FIG. 5, the lattice structure 400 formed as a result of block 620 is made up (e.g., composed) of a plurality of lattice rods 411, 412, 413, 414, 415, 416, 417, 418 which intersect at lattice nodes 421, 422, 423 and form lattice cells 431, 432 therebetween, with the lattice cells 431, 432 containing the filler 500. Each lattice cell 431, 432 is at least partially open to (e.g., communicates with) adjacent lattice cells 431, 432 (e.g., via one or more channels) such that the filler 500 can move between and occupy each lattice cell 431 , 432 during insertion of the filler 500 into the lattice structure 400 during block 624. Each rod 411, 412, 413, 414, 415, 416, 417, 418 is substantially prismatic. The lattice structure 400 may therefore not be the form of a foam (e.g., the abrasion portion 334 may not include a foam).

Use of an additive manufacturing process or a metal injection process to form the lattice structure 400 during block 622 may result in the lattice rods 411, 412, 413, 414, 415, 416, 417, 418 being at least partially porous. Such porosity may promote the abradability of the abrasion portion 334. To preserve this porosity of the lattice rods 411, 412, 413, 414, 415, 416, 417, 418, it may be that forming, at block 620, the abrasion portion does not include subjecting the lattice structure 400 to any heat treatment or hot isostatic pressing.

Forming, at block 620, the abrasion portion 334 may include causing at least one geometrical parameter of the abrasion portion 334 to vary along a primary direction 41, along a secondary direction 42, or along both the primary direction 41' and the secondary direction 42'. As shown by FIG. 5, the primary direction 41' corresponds to (e.g., is parallel with) the axial direction 41 and the secondary direction 42' corresponds to (e.g., is parallel with) the radial direction 42 of the gas turbine engine 10.

The at least one geometrical parameter of the abrasion portion 334 may be caused, at block 622', to vary while constructing, at block 622, the lattice structure 400 (e.g., by appropriately controlling the construction of the lattice structure 400). The at least geometrical parameter may comprise (e.g., be) a lattice rod 411, 412, 413, 414, 415, 416, 417, 418 thickness (e.g., a lattice rod diameter), a lattice cell 431, 432 size, a ratio (e.g., a local ratio) between a volume of the filler 500 (e.g., a filler volume) and a volume of the lattice rods 400 (e.g., a lattice rod volume), a number of lattice rods 411, 412, 413, 414, 415, 416, 417, 418 per lattice node 421, 422, 423, or an angle between adjacent lattice rods 411, 412, 413, 414, 415, 416, 417, 418 at a given lattice node 421, 422, 423. Due to the variation of the at least one geometrical parameter, the abrasion portion 334 is formed with heterogenous material properties.

In the example of FIG. 5, a plurality of geometrical parameters of the lattice structure 400 varies along the primary direction 41' and/or the secondary direction 42'. Specifically:
- the thickness 411a of a first lattice rod 411 at an axially upstream (e.g., relatively proximal to the air intake 11 along the primary direction 41'/axial direction 41) and radially outward (e.g., relatively outward of the principal rotational axis X-X along the secondary direction 42'/radial direction 42) location is greater than the thickness 411b of the first lattice rod 411 at an axially downstream and radially inward location;
- a size of a first lattice cell 431 at an axially upstream and radially outward location is greater than a size of the second lattice cell 432 at an axially downstream and radially inward location;
- a ratio between the volume of the filler 500 and the volume of the lattice rods 411, 412, 413, 414, 415, 416, 417, 418 (i.e., "the volume ratio" or the "local volume ratio") at a point lying on an axially upstream end 502 of the region of the abrasion portion 334 shown by FIG. 5 is greater than the volume ratio at a point lying on an axially downstream (e.g., relatively distal to the air intake 11 along the primary direction 41'/axial direction 41) end 504 of the region of the abrasion portion 334 shown by FIG. 5;
- the volume ratio at a point lying on an radially outward side 506 of the region of the abrasion portion 334 shown by FIG. 5 is greater than the volume ratio at a point lying on a radially inward (e.g., relatively outward of the principal rotational axis X-X along the secondary direction 42'/radial direction 42) side 508 of the region of the abrasion portion 334 shown by FIG. 5;
- the angle between adjacent lattice rods (e.g., a second lattice rod 412 and a third lattice rod 413) intersecting (e.g., at) a first lattice node 421 is obtuse whereas the angle between adjacent lattice rods (e.g., the third lattice rod 413 and a fourth lattice rod 414) intersecting (e.g., at) a second lattice node 422 is acute, with the first lattice node 421 being axially downstream and radially inward of the second lattice node 422; and
- the number of lattice rods intersecting a third lattice node 423 (e.g., four lattice rods composed of: a fifth lattice rod 415, a sixth lattice rod 416, a seventh lattice rod 417, and an eighth lattice rod 418) is greater than the number of lattice rods intersecting both the first lattice node 421 and the second lattice node 422 (e.g.,. two lattice rods composed of the second lattice rod 412 and the third lattice rod 413/the third lattice rod 413 and a fourth lattice rod 414), with the third lattice node 423 being axially upstream of both the first lattice node 421 and the second lattice node 422 as well as being radially inward of the second lattice node 422.

Variation of the at least one geometrical parameter of the abrasion portion 334 along the primary direction 41 (e.g., across the length of the abrasion portion 334) or along the secondary direction 42 (e.g., through the depth of the abrasion portion 334) optimises the abradability of the abrasion portion 334 in a direction of expecting rubbing of the turbomachine blade 311 on the abrasion portion 334 in use (e.g., within an area of interest/an intended rub area above the tip 321 of the turbomachine blade 311) while enabling maintenance of different mechanical properties of the abrasion portion 334 for impact resistance and/or for structural integrity in other directions. In particular, the heterogeneous material properties which the abrasion portion 334 possesses as a consequence of the variation of the at least one geometrical parameter may encourage fraction/erosion/wear of the abrasion portion 334 in the angular direction 43 in preference to the axial direction 41 or the radial direction 42, which may promote more appropriate fraction/erosion/wear of the abrasion portion 334 in the context of the gas turbine engine 10. As a result, gas turbine engines 10 comprising sealing arrangements in accordance with the present disclosure may be associated with improved performance.

More broadly, sealing arrangements in accordance with the present disclosure may be associated with: mass reduction; increased effective abradable depth; improved feature tolerance control/surface finish; higher fraction/erosion/wear resistance; or reduced overhaul/repair/maintenance frequency/downtimes; or a combination thereof.

The action of forming, at block 620, the abrasion portion 334 may further comprise a finishing action of subjecting the abrasion portion 334 to a machining process or a lasercutting process such as electrical discharge machining (EDM) to prepare the abrasion portion 334 for incorporation within the gas turbine engine 10.

In this example coupling, at block 604, the sealing arrangement 330 to the casing structure 24 includes aligning and disposing each protrusion 336a, 336b within the complementary recess 24a, 24b within the casing structure 24 such that the sealing arrangement 330 is mechanically fixed to the casing structure 24 by means of positive contact between the complementary formations of the sealing arrangement 330 (that is, the protrusions 336a, 336b) and the casing structure (that is, the recesses 24a, 24b). As best shown by FIG. 4, as a result of the coupling at block 604, each protrusion 336a, 336b angularly (e.g., arcuately) extends around the axial direction 41 of the gas turbine engine 10 and is disposed (e.g., sits) within the complementary recess 24a, 24b which is coextensive with the relevant protrusion 336a, 336b around the axial direction 41. In other examples, the sealing arrangement 330 may be coupled to the casing structure 24 using brazing or welding (e.g., and may not comprise complementary formations).

### Other

Various examples have been described, each of which comprise one or more combinations of features. It will be appreciated by those skilled in the art that, except where clearly mutually exclusive, any of the features may be employed separately or in combination with any other features and the invention extends to and includes all combinations and sub-combinations of one or more features described herein. The present disclosure is also relevant for land, aviation and marine applications in both civil and military contexts.

## Claims

1. A fluid flow machine comprising: a casing structure, a turbomachine blade disposed within the casing structure, and a sealing arrangement coupled to the casing structure; wherein:
the sealing arrangement comprises a support structure and an abrasion portion including a lattice structure;
the abrasion portion is formed on the support structure;
the abrasion portion is configured to provide a seal with a tip of the turbomachine blade; and
the abrasion portion includes a filler within the lattice structure, the filler comprising one or more selected from: a polyester, a polyimide, a cyanate ester, a siloxane, a polysiloxane or a polyepoxide.

2. The fluid flow machine of claim 1, wherein the filler further comprises one or more selected from: boron nitride, bentonite or silicate-based microspheres.

3. The fluid flow machine of claim 1 or claim 2, wherein the filler further comprises borosilicate glass microspheres.

4. The fluid flow machine of any preceding claim, wherein the lattice structure includes one or more selected from: nickel, a nickel chromium alloy, stainless steel or an aluminum silicon alloy.

5. The fluid flow machine of any preceding claim, wherein a geometrical parameter of the abrasion portion varies along an axial direction or a radial direction of the fluid flow machine.

6. The fluid flow machine of claim 5, wherein the geometrical parameter is one of a plurality of geometrical parameters of the abrasion portion which vary along the axial direction or the radial direction of the fluid flow machine.

7. The fluid flow machine of claim 5 or claim 6, wherein the one or more geometrical parameters includes one or more selected from: a lattice rod thickness, a lattice cell size, a ratio between a filler volume and a lattice rod volume, a number of lattice rods per lattice node, or an angle between adjacent lattice rods at a lattice node.

8. A vehicle comprising the fluid flow machine of any preceding claim.

9. A method of manufacturing a fluid flow machine, the method comprising:
producing a sealing arrangement comprising a support structure and an abrasion portion, the abrasion portion being formed on the support structure, the abrasion portion including a lattice structure; and
coupling the sealing arrangement to a casing structure such that the abrasion portion is configured to provide a seal with a tip of a turbomachine blade disposed within the casing structure,
wherein producing the sealing arrangement includes forming the abrasion portion, and
wherein forming the abrasion portion includes inserting a filler into the lattice structure, the filler comprising one or more selected from: a polyester, a polyimide, a cyanate ester, a siloxane, a polysiloxane or a polyepoxide.

10. The method of claim 9, wherein forming the abrasion portion includes constructing the lattice structure using an additive manufacturing process.

11. The method of claim 9 or claim 10, wherein the filler further comprises one or more selected from: boron nitride, bentonite or silicate-based microspheres.

12. The method of any of claims 9 to 11, wherein the filler further comprises borosilicate glass microspheres.

13. The method of any of claims 9 to 12, wherein the lattice structure includes one or more selected from: nickel, a nickel chromium alloy, a stainless steel or an aluminum silicon alloy.

14. The method of any of claims 9 to 13, wherein forming the abrasion portion includes causing a geometrical parameter of the abrasion portion to vary along a primary direction or a secondary direction, wherein the primary direction and the secondary direction respectively correspond to an axial direction and a radial direction of the fluid flow machine when the sealing arrangement is coupled to the casing structure.

15. The method of claim 14, wherein the geometrical parameter is one of a plurality of geometrical parameters of the abrasion portion which vary along the primary direction or the secondary direction.
